# EUROPÄISCHE PATENTSCHRIFT

(11) **EP 0 799 632 B1**
(45) Veröffentlichungstag und Bekanntmachung des Hinweises auf die Patenterteilung: **23.01.2002**
(21) Anmeldenummer: 97104450.8
(22) Anmeldetag: 15.03.1997
(51) Int. Cl.: B01D 35/30

(54) **Flüssigkeitsfilter, insbesondere Schmierölfilter für einen Verbrennungsmotor**
Liquid filter, especially lubricant oil filter for a combustion engine
Filtre de liquide, notamment pour filtre d'huile de graissage pour un moteur à combustion

(30) Priorität: 01.04.1996 DE 19613101
(43) Veröffentlichungstag der Anmeldung: 08.10.1997
(73) Patentinhaber: MAHLE Filtersysteme GmbH, 70376 Stuttgart (DE)
(72) Erfinder: Gebert, Hans, 74080 Heilbronn (DE); Jensen, Hans, 73237 Kirchheim/Teck (DE); Sextl, Thomas, 70372 Stuttgart (DE)
(74) Vertreter: Patentanwalts-Partnerschaft Rotermund + Pfusch

(56) Entgegenhaltungen:
- FR-A- 1 301 444
- US-A- 2 897 966
- US-A- 4 552 662

## Beschreibung

Die Erfindung betrifft ein Flüssigkeitsfilter nach dem Oberbegriff des Patentanspruchs 1.

Es gibt Anwendungsfälle, in denen die Gewindebohrung innerhalb des Anschlußteiles, an der ein gattungsgemäßes Filter zu befestigen ist, mit Bezug auf außerhalb des Anschlußteiles liegende Bauteile derart liegt, daß eine Befestigung des Filters über eine zentrisch in dem Filtergehäuse angeordnete Befestigungsschraube nicht möglich ist.

Hierfür eine Lösung zu finden, ist die Aufgabe der vorliegenden Erfindung, die durch eine Ausführung nach dem kennzeichnenden Teil des Patentanspruchs 1 gelöst wird.

Vorteilhafte Ausgestaltungen der Erfindung sind Gegenstand der Unteransprüche.

Ein Ausführungsbeispiel ist in der Zeichnung dargestellt.

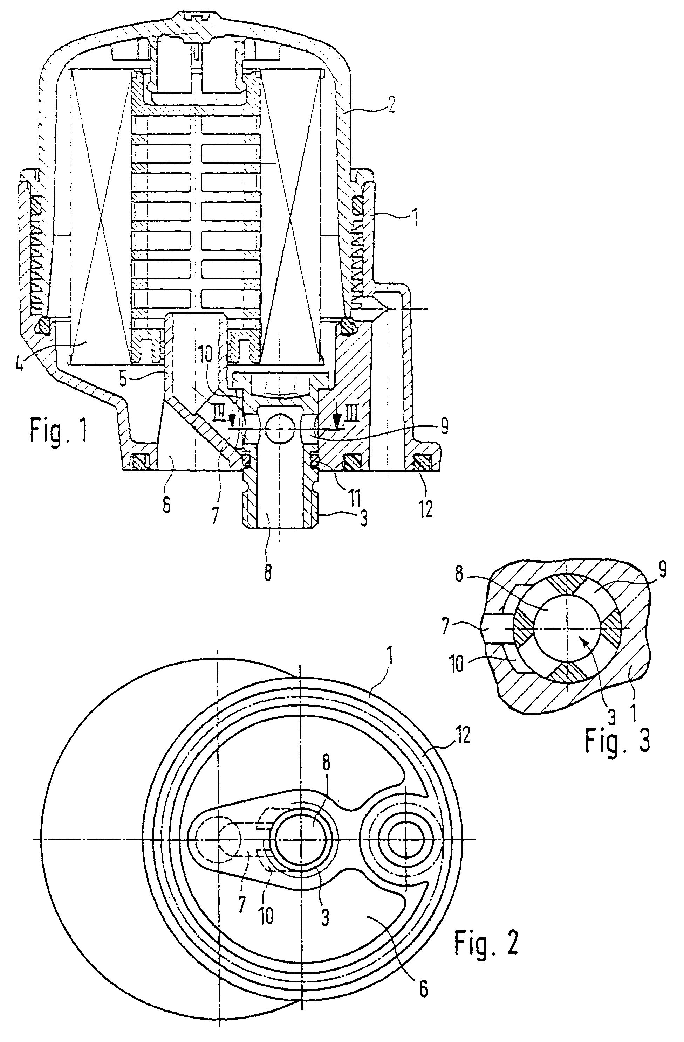

Es zeigen
- Fig. 1: einen Längsschnitt durch ein Filter,
- Fig. 2: eine Ansicht auf den Anschlußflansch des Filters,
- Fig. 3: einen Schnitt durch die Befestigungs-Schraube des Filters nach Linie IV-IV in Fig. 3 in um 45 ° verdrehter Stellung.

Das Filter besitzt ein topfförmiges Gehäuse 1, in das ein Schraubdeckel 2 einschraubbar ist. Dieses Filter ist mittels einer Schraube 3 an einem nicht dargestellten Anschlußteil befestigbar. Die Anschlußbereiche des Filters und des Anschlußteiles sind jeweils plan ausgebildet, so daß die beiden Teile über Dichtungen gegeneinander gedichtet werden können.

Die Schraube 3 liegt mit ihrem Schraubenkopf innen an dem Boden des Filtergehäuses 1 an, so daß das Filtergehäuse fest an das Anschlußteil angepreßt ist. Im Inneren des Filters befindet sich ein austauschbarer Ringfiltereinsatz 4. An einer Stirnseite ist dieser Filtereinsatz verschlossen und über eine Schnappverbindung an dem Boden des Schraubdeckels 2 befestigt. An der anderen Stirnseite ist der Filtereinsatz 4 radial dicht auf einen gehäuseseitig angebrachten Hohl-Stutzen 5 dicht aufgeschoben.

Der Filtereinsatz 4 wird von radial außen nach innen durchströmt. Die gefilterte Flüssigkeit tritt durch den hohlen Stutzen 5 aus. Die zu filternde Flüssigkeit tritt über eine als Zulauf 6 dienende Öffnung von einer korrespondierenden Öffnung des Anschlußteiles aus in das Filter ein.

Die gefilterte Flüssigkeit gelangt von dem Stutzen 5 aus über einen in die Gehäusewand eingeformten Kanal 7 in einen in die Schraube 6 eingeformten Sackloch-Hohlraum 8 ein. Dieser Eintritt erfolgt dabei über radial in der Schraube 3 vorgesehene Durchbrüche 9. Diese Durchbrüche 9 sind über den Umfang eines gewindelosen Schaftbereiches der Schraube 3 verteilt. Um in dem Übergangsbereich von dem Kanal 7 zu den Durchbrüchen 9 jeweils einen ausreichenden Strömungsquerschnitt zu besitzen, sind in Umfangsrichtung der Schraube 3 seitliche Taschen 10 in dem Wandbereich des Gehäuses 1 vorgesehen. Der Hohlraum 8 der Schraube 3 führt in das Anschlußteil, auf dem das Filter aufsitzt.

Die Schraube 3 ist in ihrem gewindelosen Schaftbereich über eine Ringdichtung 11 gegenüber der Wand des Gehäuses 1 gedichtet.

In dem Kopf der Schraube 3 ist ein Innensechskantprofil vorgesehen, um die Schraube anziehen zu können.

Die Dichtung zwischen dem Filtergehäuse 1 und dem Anschlußteil, auf das das Filter aufgesetzt wird, bewirkt eine Formdichtung 12, die noch einen zusätzlichen Verbindungskanal zwischen Filtergehäuse und Anschlußteil in dem Verbindungsbereich dicht umschließt.

Das dargestellte Filter ist für einen horizontalen Einbau gedacht.

## Patentansprüche

1. Flüssigkeitsfilter, insbesondere Schmierölfilter für einen Verbrennungsmotor, mit einem topfförmigen Gehäuse (1), einem auf dieses aufsetzbaren Deckel (2), mindestens einem austauschbaren ringförmigen radial von außen nach innen durchströmten Filtereinsatz (4), einem Zu- und Ablauf für die das Filter durchströmende Flüssigkeit innerhalb des Bodens des topfförmigen Gehäuses, einer Befestigung des Gehäuse-Bodens auf einem Anschlußteil mit dem Zu- und Ablauf des Filters korrespondierenden Öffnungen, bei dem das Gehäuse mit einer den Gehäuseboden durchgreifenden Schraube (3) auf dem Anschlußteil befestigt ist und der Ablauf durch diese Schraube erfolgt und bei dem ferner der Filtereinsatz an dem bodenseitigen Ende des Gehäuses auf einem die gereinigte Flüssigkeit abführenden Stutzen dicht aufgeschoben ist,
**gekennzeichnet durch die Merkmale,**
- die Schraube (3) ist außermittig angeordnet,
- die Schraube (3) ist eine Sackloch-Hohlschraube mit geschlossenem Kopf,
- die Schraube (3) besitzt zwischen ihrem Kopf und einem an dem gegenüberliegenden Ende vorgesehenen Gewinde einen gewindelosen Schaftbereich,
- in dem gewindelosen Schaftbereich durchgreift die Schraube (3) die Gehäusewand, an der der Schraubenkopf dicht anliegt,
- in dem gewindelosen Schaftbereich der Schraube (3) sind über den Umfang verteilt radiale zu dem Sacklochbereich führende Durchbrüche (9) vorgesehen,
- in der den gewindelosen Schaftbereich umgebenden Gehäusewand ist ein Kanal (7) vorgesehen, der von dem Ablauf des bodenseitigen Filtereinsatz-Stutzens (5) an den gewindelosen Bereich der Schraube (3) radial herangeführt ist,
- der Kanal (7) steht mit den radialen Durchbrüchen (9) in der Schraube (3) in Verbindung,
- der flüssigkeitsführende Hohlraum (8) der Schraube (3) ist abgesehen von einem Zulauf aus dem Kanal (7) und einem Ablauf nach außen gedichtet.

2. Filter nach Anspruch 1,
**dadurch gekennzeichnet,**
**daß** in dem Bereich zwischen den Durchbrüchen (9) des Schaftes der Schraube (3) und dem angrenzenden Gewinde dieser Schraube (3) eine gegenüber der Gehäusewand wirkende Ringdichtung (11) vorgesehen ist.

3. Filter nach Anspruch 1 oder 2,
**dadurch gekennzeichnet,**
**daß** der Verbindungskanal (7) über eine in Umfangsrichtung der Durchbrüche (9) in der Schraube (3) vorgesehene beidseitige Gehäusewand-Erweiterung (Taschen 10) in die die Schraube (3) aufnehmende Öffnung in der Gehäusewand einläuft.

## Claims

1. Liquid filter, in particular lubricant oil filter for an internal-combustion engine, with a pot-like housing (1), a cap (2) which can be placed thereon, at least one replaceable annular filter insert (4) flowed through radially from the outside inwards, an inlet and outlet for the liquid flowing through the filter inside the base of the pot-like housing, a fastening of the housing base to a connecting part with orifices corresponding to the inlet and outlet of the filter, in which the housing is fastened by a screw (3) which penetrates the housing base to the connecting part and the discharge takes place through this screw, and in which furthermore the filter insert at the bottom end of the housing is slipped tightly onto a connection piece which carries away the purified liquid, **characterised by** the following features:
- the screw (3) is arranged off-centre,
- the screw (3) is a blind hollow screw with closed head,
- the screw (3) has a threadless shank region between its head and a thread provided at the opposite end,
- the screw (3) penetrates the housing wall, which the screw head tightly adjoins, in the threadless shank region,
- peripherally distributed radial apertures (9) leading to the blind hole region are provided in the threadless shank region of the screw (3),
- a duct (7) leading radially from the outlet of the base-side filter insert connection piece (5) to the threadless region of the screw (3), is provided in the housing wall surrounding the threadless shank region,
- the duct (7) is connected to the radial apertures (9) in the screw (3),
- the liquid-conveying hollow space (8) of the screw (3), with the exception of an inlet from the duct (7) and an outlet, is sealed from the outside.

2. Filter according to claim 1, **characterised in that** a ring seal (11) which acts with respect to the housing wall is provided in the region between the apertures (9) of the shank of the screw (3) and the adjoining thread of this screw (3).

3. Filter according to claim 1 or 2, **characterised in that** the connecting duct (7) opens into the orifice in the housing wall which receives the screw (3) via a housing wall extension (pockets 10) provided on either side of the screw (3) in the peripheral direction of the apertures (9).

## Revendications

1. Filtre à liquide, en particulier filtre à huile de graissage pour un moteur à combustion interne, comprenant un boîtier (1) en forme de pot, un couvercle (2) pouvant être mis en place sur ce dernier, au moins une cartouche filtrante (4) interchangeable annulaire, traversée dans le sens radial de l'extérieur vers l'intérieur, une arrivée et une évacuation pour le liquide traversant le filtre, à l'intérieur du fond du boîtier en forme de pot, une fixation du fond de boîtier sur une pièce de jonction avec des ouvertures correspondantes à l'arrivée et à l'évacuation du filtre, filtre sur lequel le boîtier est fixé par une vis (3), traversant le fond du boîtier, sur la pièce de jonction, et l'écoulement est assuré au travers de cette vis, et sur lequel la cartouche filtrante est par ailleurs emmanchée hermétiquement sur l'extrémité côté fond du boîtier, sur une tubulure évacuant le liquide épuré, **caractérisé par** les caractéristiques,
- la vis (3) a une disposition excentrée,
- la vis (3) est une vis creuse à trou borgne avec une tête fermée,
- la vis (3) présente une zone de tige sans filetage entre sa tête et un filetage prévu sur l'extrémité en vis-à-vis,
- la vis (3) traverse la paroi du boîtier, sur laquelle la tête de vis s'applique hermétiquement, dans la zone de tige sans filetage,
- des percées (9) radiales réparties sur le pourtour, menant à la zone du trou borgne, sont prévues dans la zone de tige sans filetage de la vis (3),
- un canal (7), prévu dans la paroi du boîtier entourant la zone de tige sans filetage, est mené radialement de l'évacuation de la tubulure (5) de la cartouche filtrante côté fond à la zone sans filetage de la vis (3),
- le canal (7) est en liaison avec les percées radiales (9) dans la vis (3),
- l'espace creux (8), véhiculant le liquide, de la vis (3) est étanchéifié vers l'extérieur, abstraction faite d'une arrivée du canal (7) et d'une évacuation.

2. Filtre suivant la revendication 1, **caractérisé en ce qu'**un joint annulaire (11), agissant par rapport à la paroi du boîtier, est prévu dans la zone entre les percées (9) de la tige de la vis (3) et le filetage limitrophe de cette vis (3).

3. Filtre suivant l'une des revendications 1 et 2, **caractérisé en ce que** le canal de jonction (7) débouche, par l'intermédiaire d'un élargissement bilatéral de la paroi du boîtier (poches 10), prévu dans le sens périphérique des percées (9) dans la vis (3), dans l'ouverture recevant la vis (3) dans la paroi du boîtier.
